# EUROPÄISCHE PATENTSCHRIFT

(11) **EP 0 504 097 B1**
(45) Veröffentlichungstag und Bekanntmachung des Hinweises auf die Patenterteilung: **23.02.1994**
(21) Anmeldenummer: 92810043.7
(22) Anmeldetag: 23.01.1992
(51) Int. Cl.: F16L 3/14

(54) **Höhenverstellbare Rohrabhängung**
Height adjustable pipe hanger
Support pour tuyaux ajustable en hauteur

(30) Priorität: 15.03.1991 DE 4108433
(43) Veröffentlichungstag der Anmeldung: 16.09.1992
(73) Patentinhaber: HILTI Aktiengesellschaft, 9494 Schaan (LI)
(72) Erfinder: Höfle, Siegfried, A-6840 Götzis (AT)
(74) Vertreter: Wildi, Roland

(56) Entgegenhaltungen:
- EP-A- 0 223 298
- DE-A- 2 846 068
- DE-U- 7 732 253
- US-A- 4 809 601

## Beschreibung

Die Erfindung betrifft eine höhenverstellbare Rohrabhängung mit einer eine Anschlagmutter sowie eine Kontermutter tragende Gewindestange und einer bandförmigen Halteschlaufe mit abgewinkelten Enden in Form von übereinanderliegenden Laschen, von denen die erste Lasche eine Durchgangsbohrung und die zweite Lasche eine zum freien Ende hin offene Ausnehmung aufweist, wobei an der ersten Lasche ein mit einer Anschlagkante der zweiten Lasche zusammenwirkender Vorsprung angeordnet ist.

Zur Befestigung von Rohren oder dgl. an Wänden oder Decken sind Rohrabhängungen der beschriebenen Art bekannt. Beispielsweise zeigt DE-OS 2 309 664 eine solche Rohrabhängung, bestehend aus einer Halteschlaufe in Form eines Bandes, die an einem Ende mit einem aufwärtsragenden Ansatz und am anderen Ende mit einem Fenster versehen ist, das bei übereinanderliegenden Enden mit dem Ansatz in Eingriff gebracht wird.

Um einen aufwärtsragenden Ansatz der bekannten Art herstellen zu können, muss in Längsrichtung des Bandes vor und hinter dem Ansatz eine genügend grosse Auflagefläche vorhanden sein, so dass eine entsprechende Ausstanzung vorgenommen werden kann. Zudem ist das Band in diesem Endbereich breiter ausgebildet. Diese Überbreite wird nach erfolgtem Stanzvorgang auf beiden Seiten in einem zusätzlichen Arbeitsgang rechtwinklig zum Innern der Schelle abgebogen.

Die an und für sich einfache Art der Befestigung beider Laschen ist damit bei dieser bekannten Rohraufhängung kompliziert und technisch aufwendig gestaltet. Der zudem relativ schmal ausgebildete aufwärtsragende Ansatz kann nur geringe Zugkräfte aufnehmen, so dass ein sehr grosser Teil der Zugkräfte über die Verklemmung mittels beider Muttern aufgenommen werden muss.

Der Erfindung liegt die Aufgabe zugrunde, eine einfach aufgebaute Rohrabhängung zu schaffen, deren schlaufenseitige Laschen eine hohe Zugkräfte aufnehmende Verhakung aufweisen.

Erfindungsgemäss wird die Aufgabe dadurch gelöst, dass der Vorsprung von dem im wesentlichen rechtwinklig abgebogenen Ende der ersten Lasche und die Anschlagkante an der zweiten Lasche von einem Falt mit zum Innern der Halteschlaufe gerichteten, im wesentlichen U-förmigen, konkaven Ausnehmung gebildet ist.

Der auf diese Weise ausgebildete Vorsprung bewirkt eine kürzere Ausbildung der Laschen. Dadurch sind zusätzliche, gegen Durchbiegung wirkende Verstärkungsrippen nicht erforderlich. Der als Anschlagkante ausgebildete Falt ermöglicht beim Übereinanderliegen beider Laschen das Einhaken des Vorsprungs. Die gesamten Zugkräfte können somit von der Verhakung aufgenommen werden, so dass die Verklemmung beider Laschen mittels zweier Muttern lediglich das Lösen der Verhakung verhindert.

Darüber hinaus ist die Verhakung so ausgebildet, dass sie die ganzen auftretenden Zugkräfte bei konstanter Breite des Bandmaterials der Halteschlaufe aufnehmen kann.

Vorzugsweise erstreckt sich der Vorsprung der ersten Lasche über die gesamte Breite der bandförmigen Halteschlaufe. Dadurch wird eine gleichmässige Verteilung der Kräfte auf die gesamte Breite des Bandes erreicht und die Stabilität des Vorsprunges erheblich erhöht.

Zweckmässigerweise erstreckt sich der Falt der zweiten Lasche über die gesamte Breite der bandförmigen Halteschlaufe. Somit ergibt sich eine breitere Anschlagkante für den Vorsprung der ersten Lasche.

Zweckmässigerweise liegen der Vorsprung der ersten Lasche und der Falt der zweiten Lasche je auf einem Radius gleichen Zentrums, was eine grössere Verwindungs-Stabilität der gesamten Halteschlaufe im Bereich der Aufhängung gewährleistet. Damit beim Anziehen der Kontermutter ein Verdrehen beider Laschen gegeneinander verhindert wird, kann im konkaven Bereich eine Nase angeordnet sein, die in eine stirnseitige Ausnehmung des Vorsprunges eingreift. Eine weiter Möglichkeit bildet eine Verjüngung im Bereich des Vorsprunges, die in eine Ausnehmung im Faltbereich der zweiten Lasche eingreift.

Die Erfindung wird anhand eines Ausführungsbeispieles näher erläutert. Es zeigen:
- Fig. 1: eine höhenverstellbare Rohrabhängung in geschnittener Darstellung;
- Fig. 2: eine Detailvergrösserung aus der Fig. 1;
- Fig. 3: einen Schnitt durch die Rohrabhängung gemäss III-III in Fig. 1 ohne Kontermutter.

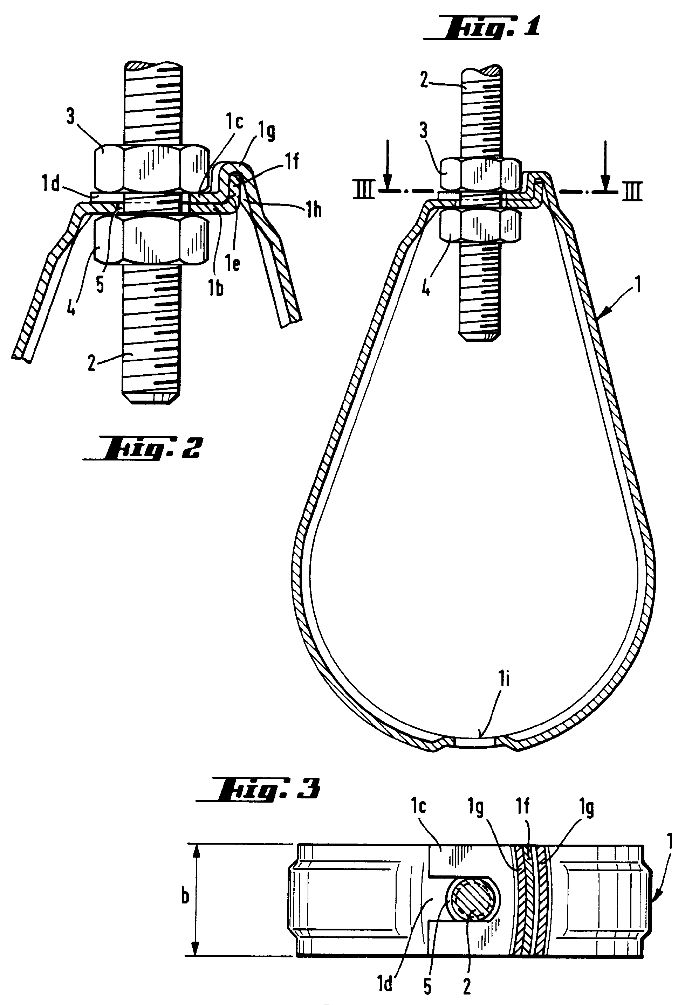

Die in Fig. 1 und Fig. 2 dargestellte höhenverstellbare Rohrabhängung weist eine Anschlagmutter 4 sowie eine, eine Kontermutter 3 tragende Gewindestange 2 und eine bandförmige Halteschlaufe 1 mit abgewinkelten Enden in Form von übereinander liegenden Laschen 1b, 1c auf. Die erste Lasche 1b weist eine Durchgangsbohrung 5 und die zweite Lasche 1c eine zum freien Ende hin offene Ausnehmung 1d auf. An der Anschlagkante 1e der Lasche 1c liegt ein Vorsprung 1f in Form eines im wesentlichen rechtwinklig abgebogenen Endes der ersten Lasche 1b an.

Die Anschlagkante 1e wird von einem Falt 1g der Lasche 1c gebildet. Der Falt 1g weist eine zum Innern der Halteschlaufe 1 gerichtete konkave Ausnehmung 1h auf, die im wesentlichen U-förmig ausgebildet ist. Die Weite der konkaven Ausnehmung 1a ist geringfügig grösser wie die Materialstärke der bandförmigen Halteschlaufe 1.

Die der Lagenfixierung auf der Gewindestange 2 dienende Kontermutter 3 und Anschlagmutter 4 sind handelsübliche Sechskantmuttern. Die Gewindestange 2 ist mittels einer nicht dargestellten Verbindung fest mit einer Wand bzw. mit einer Decke verbunden. Durch das Verdrehen der Muttern 3, 4 kann eine Lagenänderung der Halteschlaufe 1 in Längsrichtung der Gewindestange 2 erfolgen. Auf diese Weise kann ein zu befestigendes, nicht dargestelltes Rohr genau ausgerichtet werden.

Der Querschnitt der bandförmigen Halteschlaufe 1 weist eine Verstärkungsrippe auf, die zwischen beiden Laschen 1b, 1c in Längsrichtung der bandförmigen Halteschlaufe 1 verläuft.

In dem der Gewindestange 2 bzw. den Laschen 1b, 1c gegenüberliegenden Bereich der Halteschlaufe 1 ist eine dem leichteren Öffnen der Halteschlaufe 1 dienende Schwachstelle 1i an der bandförmigen Halteschlaufe 1 angeordnet. Diese Schwachstelle 1i besteht aus einer Durchgangsbohrung, die den Querschnitt des bandförmigen Materiales schwächt. Auf diese Weise wird zusätzlich ein exaktes Übereinanderliegen beider Laschen 1b, 1c erreicht, wenn die geöffnete Haltschlaufe 1 wieder geschlossen wird.

In der Fig. 3 ist ein Schnitt durch die Rohrabhängung ohne Kontermutter 3 gemäss Fig. 1 dargestellt. Der dabei geschnitten dargestellte, abgebogene Vorsprung 1f der ersten Lasche 1b sowie der geschnittene Falt 1g der zweiten Lasche 1c sind je auf einem Radius mit gleichem Zentrum angeordnet.

Der Vorsprung 1f der Lasche 1b und der Falt 1g der Lasche 1c erstrecken sich über die gesamte Breite b der bandförmigen Halteschlaufe 1.

Die Aussparung 1d weist eine Breite auf, die geringfügig grösser ist wie der Durchmesser der Gewindestange 2.

Beim Verspannen beider übereinander liegenden Laschen 1b, 1c mittels der Anschlagmutter 4 und der Kontermutter 3 kann eine Verdrehung beider Laschen 1b, 1c zueinander erfolgen. Zu diesem Zweck kann in der konkaven Ausnehmung 1h eine Nase angeordnet sein, die in eine stirnseitige Aussparung des abgebogenen Vorsprunges 1f der Lasche 1b hineingreift. Durch eine stirnseitige Verjüngung des Vorsprungs 1f, die in eine Ausnehmung im Bereich des Faltes 1g hineingreift, wird eine weitere Möglichkeit geschaffen, das Verdrehen beider Laschen 1b, 1c zu verhindern.

Die vom Gewicht des Rohres erzeugten Kräfte werden über die bandförmige Halteschlaufe 1 zum Bereich der Gewindestange 2 weitergeleitet. Die gesamten Zugkräfte, die dabei entstehen, werden von dem abgebogenen Vorsprung 1f und dem Falt 1g aufgenommen.

## Patentansprüche

1. Höhenverstellbare Rohrabhängung mit einer eine Anschlagmutter (4) sowie eine Kontermutter (3) tragenden Gewindestange (2) und einer bandförmigen Halteschlaufe (1) mit abgewinkelten Enden in Form von übereinanderliegenden Laschen (1b, 1c), von denen die erste Lasche (1b) eine Durchgangsbohrung (5) und die zweite Lasche (1c) eine zum freien Ende hin offene Ausnehmung (1d) aufweist, wobei an der ersten Lasche (1b) ein mit einer Anschlagkante (1e) der zweiten Lasche (1c) zusammenwirkender Vorsprung (1f) angeordnet ist, dadurch gekennzeichnet, dass der Vorsprung (1f) von dem im wesentlichen rechtwinklig abgebogenen Ende der ersten Lasche (1b) und die Anschlagkante (1e) an der zweiten Lasche (1c) von einem Falt (1g) mit zum Innern der Halteschlaufe (1) gerichteten, im wesentlichen U-förmigen, konkaven Ausnehmung (1h) gebildet ist.

2. Rohrabhängung nach Anspruch 1, dadurch gekennzeichnet, dass der Vorsprung (1f) der ersten Lasche (1b) sich über die gesamte Breite der bandförmigen Halteschlaufe (1) erstreckt.

3. Rohrabhängung nach Anspruch 1 oder 2, dadurch gekennzeichnet, dass der Falt (1g) der zweiten Lasche (1c) sich über die gesamte Breite der bandförmigen Halteschlaufe (1) erstreckt.

4. Rohrabhängung nach einem der Ansprüche 1 bis 3, dadurch gekennzeichnet, dass der Vorsprung (1f) der ersten Lasche (1b) und der Falt (1g) der zweiten Lasche (1c) je auf einem Radius gleichen Zentrums liegen.

## Claims

1. Height-adjustable pipe suspension, comprising a threaded rod (2) with a stop nut (4) as well as a counter nut (3) and a band-shaped support loop (1) with angled ends in the shape of stacked tongues (1b, 1c), of which a first tongue (1b) has a through-bore (5) and the second tongue (1c) has a cut-out (1d) which is open towards the free end, and that a protrusion (1f) which co-acts with the stop edge (10e) of the second tongue (1c) is arranged on the first tongue (1b), **characterised in that** the protrusion (1f) is formed by the essentially rectangularly bent end of the first tongue (1b), and the stop edge (1e) on the second tongue (1c) is shaped by a fold (1g) with a concave cut-out (1h), which is oriented towards the inside of the support loop (1) and which is substantially U-shaped and concave.

2. Pipe suspension according to claim 1, **character****ised in that** the protrusion (1f) of the first tongue (1b) extends over the entire width of the band-shaped support loop (1).

3. Pipe suspension according to claim 1 or 2, **characterised in that** the fold (1g) of the second tongue (1c) extends over the entire width of the band-shaped support loop (1).

4. Pipe suspension according to one of claims 1 to 3, **characterised in that** the protrusion (1f) of the first tongue (1b) and the fold (1g) of the second tongue (1c) are positioned on a respective radius of the same centre.

## Revendications

1. Elément de suspension pour tuyaux ajustable en hauteur, comprenant une tige filetée (2) portant un écrou de fixation (4) ainsi qu'un contre-écrou (3), et une boucle de retenue (1) en forme de bande avec des extrémités coudées en forme de pattes (1b, 1c) placées l'une sur l'autre, dont la première patte (1b) présente un trou de passage (5) alors que la seconde patte (1c) est pourvue d'un évidement (1d) ouvert en direction de l'extrémité libre, la première patte (1b) comportant une saillie (1f) qui coopère avec un bord d'arrêt (1e) de la seconde patte (1c), caractérisé en ce en ce que la saillie (1f) est constituée par l'extrémité de la première patte (1b) sensiblement coudée à angle droit, et que le bord d'arrêt (1e) sur la seconde patte (1c) est constitué par un pli (1g) avec un évidement (1h) concave sensiblement en forme de U orienté vers l'intérieur de la boucle de retenue (1).

2. Elément de suspension pour tuyaux selon la revendication 1, caractérisé en ce que la saillie (1f) de la première patte (1b) s'étend sur toute la largeur de la boucle de retenue (1) en forme de bande.

3. Elément de suspension pour tuyaux selon l'une des revendications 1 ou 2, caractérisé en ce que le pli (1g) de la seconde patte (1c) s'étend sur toute la largeur de la boucle de retenue (1) en forme de bande.

4. Elément de suspension pour tuyaux selon l'une quelconque des revendications 1 à 3, caractérisé en ce que la saillie (1f) de la première patte (1b) et le pli (1g) de la seconde patte (1c) se situent chacun sur un rayon ayant le même centre.
